(19) Europäisches Patentamt
European Patent Office
Office européen des brevets

(11) EP 4 358 217 A1

(12) **EUROPEAN PATENT APPLICATION**
published in accordance with Art. 153(4) EPC

(43) Date of publication:
**24.04.2024 Bulletin 2024/17**

(21) Application number: **22825185.6**

(22) Date of filing: **28.05.2022**

(51) International Patent Classification (IPC):
***H01M 10/0567** (2010.01)* ***H01M 10/42** (2006.01)*
***H01M 10/052** (2010.01)*

(52) Cooperative Patent Classification (CPC):
**H01M 10/0567; H01M 10/052; H01M 10/42;**
Y02E 60/10

(86) International application number:
**PCT/KR2022/007616**

(87) International publication number:
**WO 2022/265259 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 KR 20210078056**

(71) Applicant: **Samsung SDI Co., Ltd.**
**Yongin-si, Gyeonggi-do 17084 (KR)**

(72) Inventors:
- **RA, Ha Na**
  **Yongin-Si Gyeonggi-do 17084 (KR)**
- **KOH, Su Jeong**
  **Yongin-Si Gyeonggi-do 17084 (KR)**
- **GOH, Ae Hui**
  **Yongin-Si Gyeonggi-do 17084 (KR)**
- **BAE, Tae Hyon**
  **Yongin-Si Gyeonggi-do 17084 (KR)**
- **SON, Seung Hyeon**
  **Yongin-Si Gyeonggi-do 17084 (KR)**
- **LIM, Jin Hyeok**
  **Yongin-Si Gyeonggi-do 17084 (KR)**

(74) Representative: **Gulde & Partner**
**Patent- und Rechtsanwaltskanzlei mbB**
**Wallstraße 58/59**
**10179 Berlin (DE)**

# (54) ELECTROLYTE FOR LITHIUM SECONDARY BATTERY AND LITHIUM SECONDARY BATTERY COMPRISING SAME

(57) An electrolyte for a lithium secondary battery and a lithium secondary battery including the same are provided. The electrolyte for a lithium secondary battery may include: a lithium salt; a non-aqueous organic solvent; and a sulfone-based compound additive including at least one phenyl group and a silane-based compound additive including at least one phenyl group.

FIG. 1

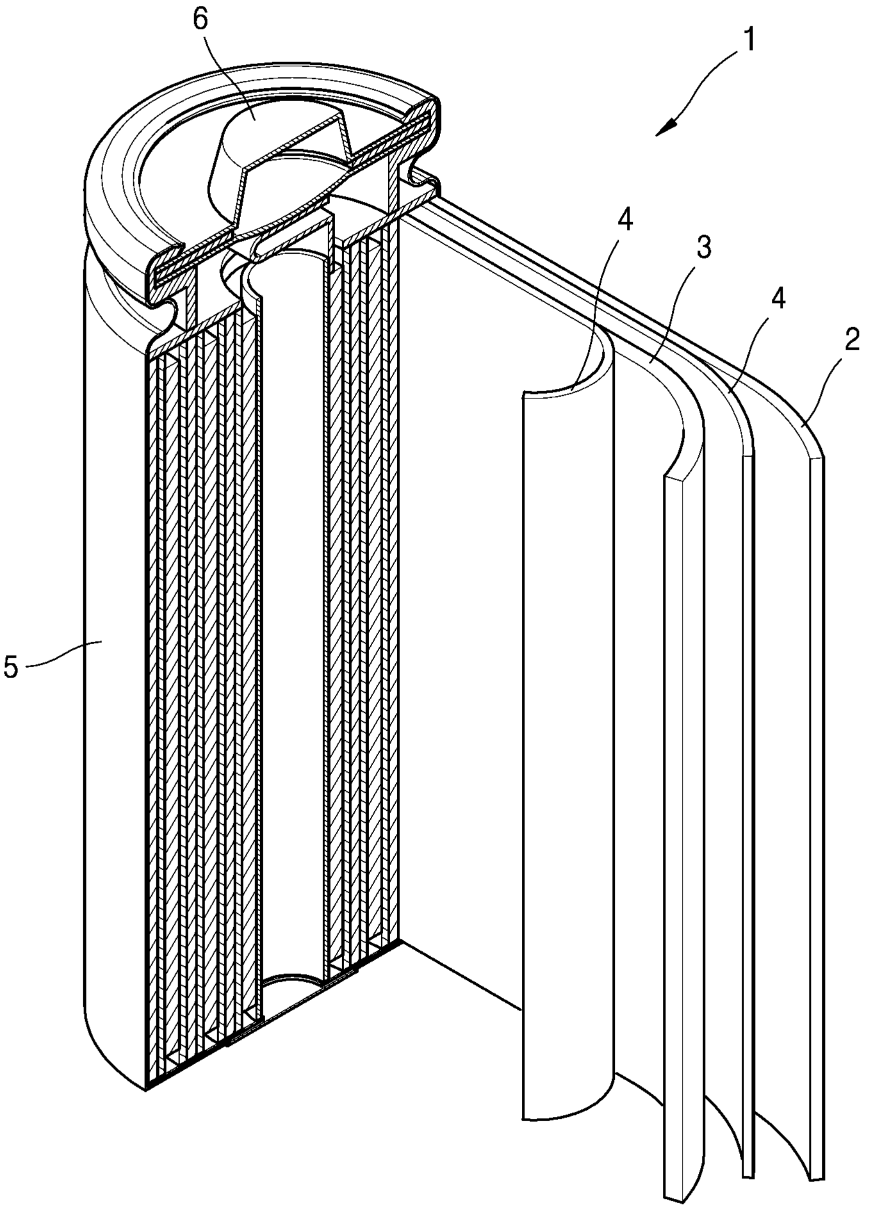

## Description

### Technical Field

The present disclosure relates to an electrolyte for a lithium secondary battery and a lithium secondary battery including the same.

### Background Art

Compared to lead storage batteries of the related art, nickel-cadmium batteries, nickel-metal hydride batteries, and nickel-zinc batteries, lithium secondary batteries have more than three times higher energy density per unit weight and are capable of highspeed charging.

A lithium secondary battery must be stable within the operating voltage range of the battery and must maintain safety even beyond the operating voltage range. However, in a lithium secondary battery, excess lithium is deintercalated from a positive electrode under an overcharge and overvoltage environment, and lithium may be excessively intercalated into a negative electrode. As a result, both the positive electrode and the negative electrode become unstable.

Various additives are added to the electrolyte to solve the problem under the overcharge and overvoltage environment. In this case, however, some of the performance of the lithium secondary battery may be degraded.

Therefore, there is still a need for maintaining battery performance such as low temperature (-10 °C) discharge capacity (ratio), high temperature (60 °C) storage characteristics, and high temperature (45 °C) life characteristics or minimizing degradation of cell performances, while improving safety by improving overcharge characteristics of lithium secondary batteries.

### Detailed Description of the disclosure

### Technical Problem

One aspect is to provide an electrolyte for a lithium secondary battery containing a novel electrolyte additive.

Another aspect is to provide a lithium secondary battery containing the electrolyte.

### Technical Solution to Problem

According to one aspect, provided is an electrolyte for a lithium secondary battery, the electrolyte including:

a lithium salt;
a non-aqueous organic solvent; and
a sulfone-based compound additive including at least one phenyl group and a silane-based compound additive including at least one phenyl group.

The sulfone-based compound additive may be a compound represented by Formula 1:

Formula 1

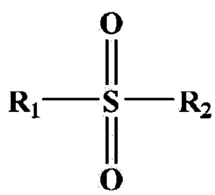

wherein

$R_1$ and $R_2$ may each independently be a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 alkylaryl group, or a substituted or unsubstituted C6-C50 heteroaryl group, and
at least one of $R_1$ and $R_2$ may be a C6 aryl group unsubstituted or substituted with a halogen element.

The sulfone-based compound additive may include a compound represented by Formula 1-1:

Formula 1-1

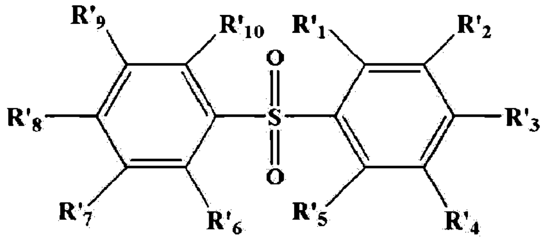

wherein

$R'_1$, $R'_2$, $R'_3$, $R'_4$, $R'_5$, $R'_6$, $R'_7$, $R'_8$, $R'_9$, and $R'_{10}$ may each independently be a hydrogen atom, a halogen atom, a cyano group, $-OR_a$ ($R_a$ is a C1-C10 alkyl group, or a C6-C20 aryl group), $-C(=O)R_b$, $-C(=O)OR_b$, $-OCO(OR_b)$, $-(X)_n-NH_2$ (X is a C1-C10 alkyl group, or a C1-C10 alkoxy group, and n is an integer from 0 to 10), $-C=N(R_b)$, $-SR_b$, $-S(=O)R_b$, $-S(=O)_2R_b$, a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C3-C30 cycloalkyl group, a substituted or unsubstituted C6-C30 aryl group, a substituted or unsubstituted C6-C30 aryloxy group, or a substituted or unsubstituted C6-C30 heteroaryl group, where $R_b$ is hydrogen, a C1-C10 alkyl group, or a C6-C20 aryl group, and

at least one of $R'_1$, $R'_2$, $R'_3$, $R'_4$, $R'_5$, $R'_6$, $R'_7$, $R'_8$, $R'_9$, and $R'_{10}$ may be a fluorine atom.

The silane-based compound additive may be a compound represented by Formula 2:

Formula 2

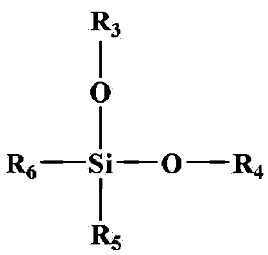

wherein

$R_3$, $R_4$, $R_5$, and $R_6$ may each independently be $-OR'_a$ ($R'_a$ is a C1-C10 alkyl group or a C6-C20 aryl group), $C(=O)R'_b$, $-C(=O)OR'_b$, a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 aryloxy group, a substituted or unsubstituted C6-C50 alkylaryl group, or a substituted or unsubstituted C6-C50 heteroaryl group, where $R'_b$ is hydrogen, a C1-C10 alkyl group, or a C6-C20 aryl group, and

at least one of $R_3$, $R_4$, $R_5$, and $R_6$ may be a substituted or unsubstituted C6 aryl group.

The silane-based compound additive may include a compound represented by Formula 2-1:

Formula 2-1

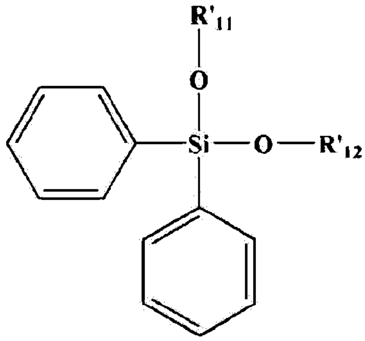

wherein

$R'_{11}$ and $R'_{12}$ may each independently be C(=O)$R''_a$, -C(=O)O$R''_a$, a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C30 aryl group, a substituted or unsubstituted C6-C30 alkylaryl group, or a substituted or unsubstituted C6-C30 heteroaryl group, where $R''_a$ may be hydrogen, a C1-C10 alkyl group, or a C6-C20 aryl group.

The sulfone-based compound additive may include at least one of Compound 1 and Compound 2, and the silane-based compound additive may include at least one of Compound 3 and Compound 4:

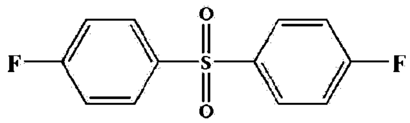

Compound 1

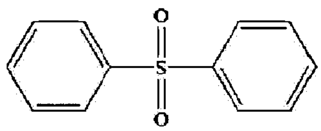

Compound 2

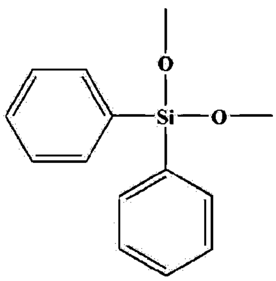

Compound 3

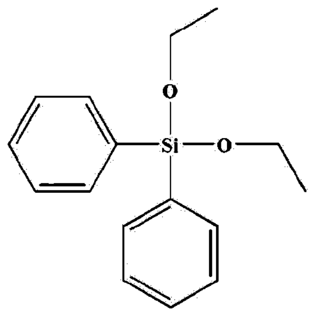

Compound 4

a weight ratio of the sulfone-based compound additive to the silane-based compound additive may be 1:7 to 7:1.

The total amount of the sulfone-based compound additive and the silane-based compound additive may be in the range of 0.1 parts by weight to 10 parts by weight based on 100 parts by weight of the total amount of the electrolyte.

According to another aspect, provided is a lithium secondary battery including:

a positive electrode that includes a positive electrode active material;
a negative electrode that includes a negative electrode active material; and
an electrolyte disposed between the positive electrode and the negative electrode.

Advantageous Effects of Disclosure

An electrolyte for a lithium secondary battery according to one aspect includes a sulfone-based compound additive including at least one phenyl group and a silane-based compound additive including at least one phenyl group.

In a lithium secondary battery including the electrolyte, a film is formed on the positive electrode under an overcharge and overvoltage environment so that a positive electrode is protected and the increase in the voltage is suppressed and thus the decomposition of electrolyte is suppressed. Therefore, the lithium secondary battery maintains the performances of low-temperature (-10 °C) discharge capacity (ratio), high-temperature (60 °C) storage characteristics, and high-temperature (45 °C) lifespan characteristics, or improves overcharge characteristics while minimizing the degradation of the performances, thereby increasing the safety.

Brief Description of Drawings

FIG. 1 is a schematic diagram of a lithium secondary battery according to an embodiment.

FIG. 2 is an overcharge test result for the lithium secondary batteries manufactured according to Examples 8 to 13 and Comparative Example 6.

Mode of Disclosure

Hereinafter, an electrolyte for a lithium secondary battery and a lithium secondary battery including the same will be described in detail with reference to embodiments and drawings of present disclosure. These embodiments are presented as an example to explain the present disclosure in more detail, and it would be apparent to those skilled in the art that the scope of the present disclosure is not limited by these embodiments.

Unless otherwise defined, all technical and scientific terms used herein have the same meaning as commonly understood by one of ordinary skill in the art to which the present disclosure belongs. In case of conflict, the present specification, including definitions, will take precedence.

Although methods and materials that are similar or equivalent to those described herein, can be used in the practice or testing of the present disclosure, suitable methods and materials are described herein. An expression used in the singular encompasses the expression of the plural, unless it has a clearly different meaning in the context.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

The term "a combination of these" refers to a mixture or combination of at least one of the described elements.

The term "and/or" as used herein refers to including any and all combinations of at least one of the items described in relation thereto. The term "or" in this specification refers to "and/or". The expression "at least one", "one or more", or "one or more" in front of elements in this specification does not refer to that the list of entire elements can be supplemented and individual elements of the description may not be supplemented.

In the drawings, thicknesses may be magnified or exaggerated to clearly illustrate various layers and regions. Like reference numbers may refer to like elements throughout the drawings and the following description. It will be understood that when a layer, a film, a region, a plate, etc. is referred to as being "on" another layer, another film, another region, another plate, etc., it can be directly on the other element or intervening elements may be present therebetween. Although the terms "first," "second," etc. may be used herein to describe various elements, these elements should not be limited by these terms. These terms are only used to distinguish one element from another element.

In general, additives for improving overcharge characteristics have a structure that includes a biphenyl group. When the overcharge characteristics improving additive is included in the electrolyte, a lithium secondary battery containing the same may undergo the decomposition of an the electrolyte even within a normal operating voltage range, and thus the cell internal resistance is increased, and the performance of the lifespan characteristics may be degraded.

An electrolyte for a lithium secondary battery according to an embodiment may include: a lithium salt; a non-aqueous organic solvent; and a sulfone-based compound additive including at least one phenyl group and a silane-based compound additive including at least one phenyl group.

An electrolyte for a lithium secondary battery according to an embodiment includes a sulfone-based compound additive including at least one phenyl group and a silane-based compound additive including at least one phenyl group. The sulfone-based compound additive including at least one phenyl group forms a film on the positive electrode to protect the positive electrode under overcharge and overvoltage conditions. The silane-based compound additive including at least one phenyl group may suppress the increase in the voltage of the battery under overcharge and overvoltage conditions, thereby preventing the decomposition of the electrolyte. Therefore, in the case of a lithium secondary battery that includes the electrolyte, the overcharge characteristics are improved and thus the safety may be enhanced, and at the same time, the performances of low temperature (-10 °C) discharge capacity (ratio), high temperature (60 °C) storage characteristics, and high temperature (45 °C) life characteristics may be maintained or the decrease in the performances

may be minimized.

For example, the sulfone-based compound additive may be a compound represented by Formula 1:

Formula 1

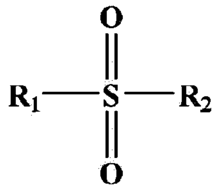

wherein

$R_1$ and $R_2$ may each independently be a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 alkylaryl group, or a substituted or unsubstituted C6-C50 heteroaryl group, and

at least one of $R_1$ and $R_2$ may be a $C_6$ aryl group unsubstituted or substituted with a halogen element.

For example, the sulfone-based compound additive may include a compound represented by Formula 1-1:

Formula 1-1

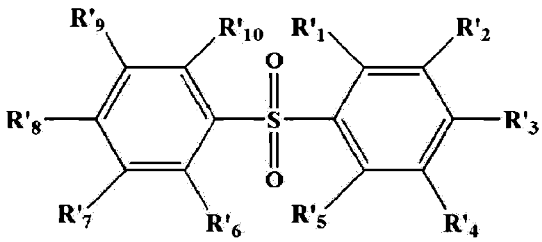

wherein

$R'_1$, $R'_2$, $R'_3$, $R'_4$, $R'_5$, $R'_6$, $R'_7$, $R'_8$, $R'_9$, and $R'_{10}$ may each independently be a hydrogen atom, a halogen atom, a cyano group, $-OR_a$ ($R_a$ is a C1-C10 alkyl group, or a C6-C20 aryl group), $-C(=O)R_b$, $-C(=O)OR_b$, $-OCO(OR_b)$, $-(X)_n-NH_2$ (X is a C1-C10 alkyl group, or a C1-C10 alkoxy group, and n is an integer from 0 to 10), $-C=N(R_b)$, $-SR_b$, $-S(=O)R_b$, $-S(=O)_2R_b$, a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C3-C30 cycloalkyl group, a substituted or unsubstituted C6-C30 aryl group, a substituted or unsubstituted C6-C30 aryloxy group, or a substituted or unsubstituted C6-C30 heteroaryl group, where $R_b$ is hydrogen, a C1-C10 alkyl group, or a C6-C20 aryl group, and

at least one of $R'_1$, $R'_2$, $R'_3$, $R'_4$, $R'_5$, $R'_6$, $R'_7$, $R'_8$, $R'_9$, and $R'_{10}$ may be a fluorine atom.

The sulfone-based compound additive forms a film on the surface of the positive electrode. The film may act as a protective film that blocks the active site on the surface of the positive electrode, and thus, prevents some of the transition metal from being eluted and deposited on the negative electrode during charging and discharging, and suppresses side reactions and gas generation occurring between the electrolyte and the positive electrode and thus high-temperature performance and overcharge characteristics can be improved.

For example, the silane-based compound additive may include a compound represented by Formula 2-1:

Formula 2-1

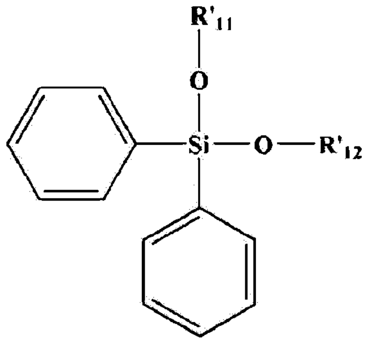

wherein

R'$_{11}$ and R'$_{12}$ may each independently be C(=O)R"$_a$, -C(=O)OR"$_a$, a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C30 aryl group, a substituted or unsubstituted C6-C30 alkylaryl group, or a substituted or unsubstituted C6-C30 heteroaryl group, where R"$_a$ may be hydrogen, a C1-C10 alkyl group, or a C6-C20 aryl group.

Regarding the silane-based compound additive, during the initial charge, the additive is partially reduced and decomposed on the negative electrode, so that a protective film formed of suitable ion conductivity is formed on the surface of the negative electrode and a voltage rise even in an overcharged environment is suppressed to prevent the decomposition of an electrolyte.

For example, the sulfone-based compound additive may include at least one of Compound 1 and Compound 2, and the silane-based compound additive may include at least one of Compound 3 and Compound 4:

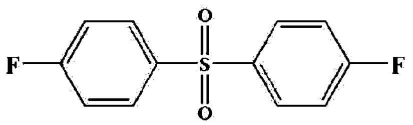

Compound 1

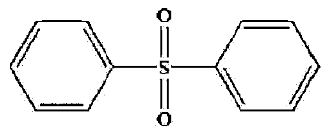

Compound 2

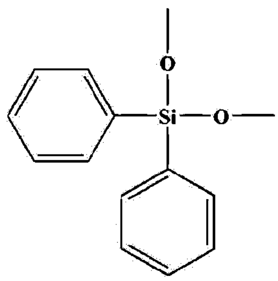

Compound 3

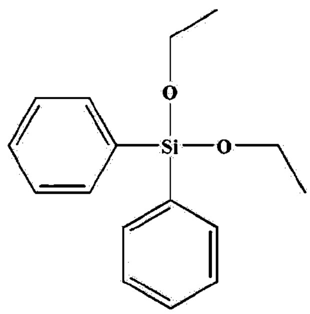

Compound 4

A weight ratio of the sulfone-based compound additive to the silane-based compound additive may be 1:7 to 7:1. For example, the weight ratio of the sulfone-based compound additive to the silane-based compound additive may be 1:5 to 5:1 or 1:3 to 3:1. Within these weight ratio ranges, a lithium secondary battery including these additives maintains the performances of low-temperature (-10 °C) discharge capacity (ratio), high-temperature (60 °C) storage characteristics, and high-temperature (45 °C) life characteristics, or improves overcharge characteristics while minimizing the degradation of the performances, thereby maximizing the safety.

The total amount of the sulfone-based compound additive and the silane-based compound additive may be in the range of 0.1 parts by weight to 10 parts by weight based on 100 parts by weight of the total amount of the electrolyte. For example, the total amount of the sulfone-based compound additive and the silane-based compound additive may be, based on 100 parts by weight of the electrolyte, 0.1 parts by weight to 9 parts by weight, 0.1 parts by weight to 8 parts by weight, 0.1 parts by weight to 7 parts by weight, 0.1 parts by weight to 6 parts by weight, 0.1 parts by weight to

5 parts by weight, 0.1 parts by weight to 4 parts by weight, 0.1 parts by weight to 3 parts by weight 0.1 parts by weight to 2 parts by weight, or 0.1 parts by weight to 1 part by weight. Within these amount ratio ranges, a lithium secondary battery including these additives maintains the performances of low-temperature (-10 °C) discharge capacity (ratio), high-temperature (60 °C) storage characteristics, and high-temperature (45 °C) life characteristics, or improves overcharge characteristics while minimizing the degradation of the performances, thereby maximizing the safety.

The lithium salt may include a lithium cation, and

an anion selected from F-, $Cl^-$, Br-, I-, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N$-, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $PO_2F_2^-$, and $(CF_3CF_2SO_2)_2N^-$. The concentration of the lithium salt in the electrolyte may be 0.01 M to 2.0 M, but is not necessarily limited to this range, and an appropriate concentration may be used as needed. Battery performance may be further improved within these concentration ranges.

The non-aqueous organic solvent may be a carbonate-based solvent, an ester-based solvent, an ether-based solvent, a ketone-based solvent, an alcohol-based solvent, an aprotic solvent, or a combination thereof.

The non-aqueous organic solvent included in the electrolyte for the lithium secondary battery act as a medium through which ions involved in the electrochemical reaction of the battery can move. The non-aqueous organic solvent used herein is not particularly limited as long as it is commonly used in the art.

Specifically, the carbonate-based solvent may be, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may be, for example, methyl acetate, ethyl acetate, n-propyl acetate, dimethyl acetate, methyl propionate, ethyl propionate, propyl propionate, γ-butyrolactone, decanolide, valerolactone, mevalonolactone, or caprolactone. The ether-based solvent may be, for example, dibutyl ether, tetraglyme, diglyme, dimethoxyethane, 2-methyltetrahydrofuran, or tetrahydrofuran, and the ketone-based solvent may be, for example, cyclohexanone.

In addition, the alcohol-based solvent may be, for example, ethyl alcohol, or isopropyl alcohol, and the aprotic solvent may be nitriles such as R-CN (R is a linear, branched, or cyclic hydrocarbon group having 2 to 20 carbon atoms, and may include double bonded aromatic rings or ether bonds), amides such as dimethylformamide, dioxolanes such as 1,3-dioxolane, sulfolanes, etc.

The non-aqueous organic solvent may be used alone or in combination of two or more thereof, and when used in combination of two or more thereof, the mixing ratio may be appropriately adjusted according to the desired battery performance, which would be widely understood by those skilled in the art.

In addition, in the case of the carbonate-based solvent, a mixture of cyclic carbonate and chain carbonate may be used therefor. In this case, the performance of the electrolyte may be excellent when the cyclic carbonate and the chain carbonate are mixed in a volume ratio of 1:1 to 1:9.

The non-aqueous organic solvent of the present disclosure may further include an aromatic hydrocarbon-based organic solvent in the carbonate-based solvent. At this time, the carbonate-based solvent and the aromatic hydrocarbon-based organic solvent may be mixed in a volume ratio of 1:1 to 30:1. The aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2 ,4-trichlorobenzene, iodobenzene, 1,2-diiodobenzene, 1,3-diiodobenzene, 1,4-diiodobenzene, 1,2,3-triiodobenzene, 1,2, 4-triiodobenzene, toluene, fluorotoluene, 1,2-difluorotoluene, 1,3-difluorotoluene, 1,4-difluorotoluene, 1,2,3-trifluorotoluene , 1,2,4-trifluorotoluene, chlorotoluene, 1,2-dichlorotoluene, 1,3-dichlorotoluene, 1,4-dichlorotoluene, 1,2,3-trichlorotoluene, 1,2, 4-trichlorotoluene, iodotoluene, 1,2-diiodotoluene, 1,3-diiodotoluene, 1,4-diiodotoluene, 1,2,3-triiodotoluene, 1,2,4 - triiodotoluene, xylene, or a combination thereof.

For example, the non-aqueous organic solvent may include one or more selected from ethylene carbonate (EC), propylene carbonate (PC), ethyl methyl carbonate (EMC), methyl propyl carbonate, ethyl propyl carbonate, dimethyl carbonate (DMC), diethyl carbonate (DEC), dipropyl carbonate, vinyl ethylene carbonate (VEC), butylene carbonate, ethyl propionate (EP), propyl propionate (PP), ethyl butyrate, dimethyl sulfoxide, dimethylformamide, dimethylacetamide, gamma-valerolactone, gamma-butyrolactone, or tetrahydrofuran. However, the non-aqueous organic solvent is not limited thereto, and any non-aqueous organic solvents that are available in the art, may be used.

The electrolyte may be in a liquid or gel state.

A lithium secondary battery according to another embodiment includes: a positive electrode that includes a positive electrode active material; a negative electrode that includes a negative electrode active material; and an electrolyte disposed between the positive electrode and the negative electrode. The type of the lithium secondary battery is not particularly limited, and the lithium secondary battery may include lithium secondary batteries such as lithium ion batteries, lithium ion polymer batteries, and lithium sulfur batteries.

When the lithium secondary battery includes the electrolyte described above, the performances of low temperature (-10 °C) discharge capacity (ratio), high temperature (60 °C) storage characteristics, and high temperature (45 °C)

life characteristics may be maintained, or while the degradation of the performances are minimized, overcharge characteristics may be improved and thus the safety is increased.

For example, the positive electrode active material may be selected from compounds represented by the following formulae: For example, a compound represented by one of the following formulae may be used herein: $Li_aA_{1-b}D'_bE_2$ (where $0.90 \le a \le 1.8$ and $0 \le b \le 0.5$); $Li_aG_{1-b}D'_bO_{2-c}E_c$ (where $0.90 \le a \le 1.8$, $0 \le b \le 0.5$, and $0 \le c \le 0.05$); $LiG_{2-b}D'_bO_{4-c}E_c$ (where $0 \le b \le 0.5$ and $0 \le c \le 0.05$); $Li_aNi_{1-b-c}Co_bD'_cE_\alpha$ (where $0.90 \le a \le 1.8$, $0 \le b \le 0.5$, $0 \le c \le 0.05$, and $0 < \alpha \le 2$); $Li_aNi_{1-b-c}Co_bD'_cO_{2-\alpha}J_\alpha$ (where $0.90 \le a \le 1.8$, $0 \le b \le 0.5$, $0 \le c \le 0.05$, and $0 < \alpha < 2$); $Li_aNi_{1-b-c}Co_bD'_cO_{2\alpha}J_2$ (where $0.90 \le a \le 1.8$, $0 \le b \le 0.5$, $0 \le c \le 0.05$, and $0 < \alpha < 2$); $Li_aNi_{1-b-c}Mn_bD'_cE_\alpha$ (where $0.90 \le a \le 1.8$, $0 \le b \le 0.5$, $0 \le c \le 0.05$, and $0 < \alpha \le 2$); $Li_aNi_{1-b-c}Mn_bD'_cO_{2-\alpha}J_\alpha$ (where $0.90 \le a \le 1.8$, $0 \le b \le 0.5$, $0 \le c \le 0.05$, and $0 < \alpha < 2$); $Li_aNi_{1-b-c}Mn_bD'_cO_{2-\alpha}J_2$ (where $0.90 \le a \le 1.8$, $0 \le b \le 0.5$, $0 \le c \le 0.05$, and $0 < \alpha < 2$); $Li_aNi_bG_cL_dO_2$ (where $0.90 \le a \le 1.8$, $0 \le b \le 0.9$, $0 \le c \le 0.5$, and $0.001 \le d \le 0.2$); $Li_aNi_bG_cO_2$ (where $0.90 \le a \le 1.8$, $0 \le b \le 0.9$, and $0 \le c \le 0.5$); $Li_aNi_bCo_cMn_dL_eO_2$ (where $0.90 \le a \le 1.8$, $0 \le b \le 0.9$, $0 \le c \le 0.5$, $0 \le d \le 0.5$, and $0.001 \le e \le 0.2$); $Li_aNi_bCo_cMn_dO_2$ (where $0.90 \le a \le 1.8$, $0 \le b \le 0.9$, $0 \le c \le 0.5$, and $0 \le d \le 0.5$); $Li_aNiL_bO_2$ (where $0.90 \le a \le 1.8$ and $0.001 \le b \le 0.2$); $Li_aCoL_bO_2$ (where $0.90 \le a \le 1.8$ and $0.001 \le b \le 0.2$); $Li_aMnL_bO_2$ (where $0.90 \le a \le 1.8$ and $0.001 \le b \le 0.2$); $Li_aMn_2L_bO_4$ (where $0.90 \le a \le 1.8$ and $0.001 \le b \le 0.2$); $Li_aMn_2O_4$ (where $0.90 \le a \le 1.8$); $MO_2$; $MS_2$; $LiMS_2$; $V_2O_5$; $LiV_2O_5$; $LiQO_2$; $LiNiVO_4$; $Li_{(3-f)}T_2(PO_4)_3$ (where $0 \le f \le 2$); $Li_{(3-f)}Fe_2(PO_4)_3$ (where $0 \le f \le 2$); and $LiFePO_4$.

Regarding the formulae above, A may be selected from the group consisting of Ni, Co, Mn, and a combination thereof, D' may be selected from the group consisting of Al, Ni, Co, Mn, Cr, Fe, Mg, Sr, V, a rare earth element, and a combination thereof, E may be selected from the group consisting of O, F, S, P and a combination thereof, G may be selected from the group consisting of Co, Mn, and a combination thereof, J may be selected from the group consisting of F, S, P, and a combination thereof, L may be a transition metal or a lanthanide element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Ru, Os, Hs, Rh, Ir, Pd, Pt, Cu, Ag, Au, Zn, Cd, B, Al, Ga, In, Tl, Si , Ge, Sn, P, As, Sb, Bi, S, Se, Te, Po, Mn, La, Ce, and a combination thereof, M may be selected from the group consisting of Ti, Mo, Mn, and a combination thereof, Q may be selected from the group consisting of Cr, V, Fe, Sc, Ti, Y, and a combination thereof, and T may be selected from the group consisting of V, Cr, Mn, Co, Ni, Cu, and a combination thereof. Specifically, the positive electrode active material may be $LiCoO_2$.

The negative electrode active material may include a carbon-based material, a silicon-based material, or a silicon-carbon-based composite.

The carbon-based material may be crystalline carbon, amorphous carbon, or a mixture thereof. The crystalline carbon may be graphite such as amorphous, plate-shaped, flake-shaped, spherical or fibrous natural graphite or artificial graphite, and the amorphous carbon may be soft carbon (low-temperature calcined carbon) or hard carbon, mesophase pitch carbide, or calcined coke.

The silicon-based material may include silicon particles, silicon alloy particles, or/and silicon nanowires. For example, the on-based material may be silicon particles and may have an average particle diameter of 50 nm to 150 nm.

The silicon-carbon-based composite may be a composite having a structure in which silicon nanoparticles are disposed on a carbon-based compound, a composite in which silicon particles are included on the surface of the carbon-based compound and inside the carbon-based compound, and a composite in which silicon nanoparticles, on which a carbon-based compound is coated, are included inside the carbon-based compound. In a composite of a silicon-based compound and a carbon-based compound, the carbon-based compound may be graphite, graphene, graphene oxide, or a combination thereof.

For example, the negative electrode active material may be an active material obtained by dispersing silicon nanoparticles having an average particle diameter of about 200 nm or less on carbon-based compound particles and then coating carbon on the same, or an active material in which silicon (Si) particles are present on and inside graphite etc. The silicon nanoparticles may have an average particle diameter of 50 nm to 150 nm. An average particle diameter of the silicon-carbon-based composite may be, for example, 1 μm to 20 μm. A lithium secondary battery including the negative electrode active material may have improved properties in terms of initial efficiency, capacity, and lifespan characteristics.

The lithium secondary battery may be manufactured by the following method.

First, a positive electrode is prepared.

The positive electrode may be manufactured by, for example, the following exemplary method, but the method is not necessarily limited thereto and is adjusted according to required conditions.

First, a positive electrode active material composition is prepared by mixing the positive electrode active material, a conductive agent, a binder, and a solvent. The prepared positive electrode active material composition is directly coated on an aluminum current collector and dried to prepare a positive electrode plate having a positive electrode active material layer formed thereon. Alternatively, the positive electrode active material composition is cast on a separate support, and then a film obtained by peeling from the support is laminated on the aluminum current collector to manufacture a positive electrode plate having a positive electrode active material layer formed thereon.

Examples of the conductive agent include carbon black, graphite particles, natural graphite, artificial graphite,

acetylene black, Ketjen black, and carbon fiber; carbon nanotubes; metal powders, metal fibers or metal tubes of copper, nickel, aluminum, or silver; conductive polymers such as polyphenylene derivatives, but are not limited thereto. The conductive agent may be any conductive material that is used in the art.

The binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. The solvent may be N-methylpyrrolidone (NMP), acetone, water, etc. However, the binder and the solvent are not limited thereto, and may be any binder or solvent that is used in the art.

A plasticizer or a pore forming agent may be added to the positive electrode active material composition to form pores in an electrode plate.

The amounts of the positive electrode active material, the conductive agent, the binder, and the solvent used for the positive electrode are at such levels that are normally used in lithium secondary batteries. Depending on the use and configuration of the lithium secondary battery, one or more of the conductive agent, the binder, and the solvent may be omitted. The positive electrode active material may further include the following positive electrode active material in addition to the positive electrode active material described above.

The positive electrode active material is a lithium-containing metal oxide, and any material that is commonly used in those skilled in the art may be used therefor without limitation. For example, one or more types of composite oxides of lithium and a metal selected from cobalt, manganese, nickel, and combinations thereof may be used, and may be a compound represented by one of the following formulae: $Li_aA_{1-b}B'_bD'_2$ (where $0.90 \leq a \leq 1$, and $0 \leq b \leq 0.5$); $Li_aE_{1-b}B'_bO_{2}\text{-}_cD'_c$ (where $0.90 \leq a \leq 1$, $0 \leq b \leq 0.5$, and $0 \leq c \leq 0.05$); $LiE_{2-b}B'_bO_{4}\text{-}_cD'_c$ (where $0 \leq b \leq 0.5$ and $0 \leq c \leq 0.05$); $Li_aNi_{1-b-c}Co_bB'_cD'_a$ (where $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (where $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1$, $0 \leq b \leq 0.5$, $0 \leq c \leq 0.05$, and $0 < \alpha \leq 2$); $Li_aNi_{1-b-c}Mn_bB'_cO_{2-a}F'_a$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3(0 \leq f \leq 2)$; $Li_{(3-f)}Fe_2(PO_4)_3(0 \leq f \leq 2)$; and $LiFePO_4$:

Regarding the formulae representing the compounds described above, A is Ni, Co, Mn, or a combination thereof; B' is Al, Ni, Co, Mn, Cr, Fe, Mg, Sr, V, a rare earth element, or a combination thereof, D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof.

For example, the positive electrode active material may include $LiCoO_2$, $LiMn_gO_{2g}$(g=1 or 2), $LiNi_{1-g-k}Co_gAl_kO_2(0<g<1, 0<k\leq0.5)$, $LiNi_{1-g-k}Co_gMn_kO_2(0\leq g\leq0.5, 0\leq k\leq0.5)$, or $LiFePO_4$.

A compound in which a coating layer is provided on the surface of these compound may be used, and a mixture of these compound and the compound provided with the coating layer may also be used. The coating layer applied to the surface of these compounds includes, for example, an oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the positive electrode active material. The coating method may be, for example, spray coating, dipping method, or the like. A detailed description of the coating method will be omitted because it may be well understood by those in the art.

Next, a negative electrode is prepared as follows. For example, the negative electrode is manufactured in substantially the same way as the positive electrode, except that the negative electrode active material is used instead of the positive electrode active material. In addition, the negative electrode active material composition may include substantially the same conductive agent, binder, and solvent which are used in the positive electrode active material composition.

For example, a negative electrode active material composition is prepared by mixing a negative electrode active material, a conductive agent, a binder, and a solvent, and the same is directly coated on a copper current collector to prepare a negative electrode plate. Alternatively, the prepared negative electrode active material composition is cast on a separate support and a negative electrode active material film peeled off from the support is laminated on a copper current collector to manufacture a negative electrode plate.

In addition to the negative electrode active materials described above, any negative electrode active material that is used in the art as a negative electrode active material of a lithium secondary battery, may be used. For example, at least one selected from lithium metal, lithium-alloyable metal, transition metal oxide, non-transition metal oxide, and carbon-based material is included.

The lithium-alloyable metal may be, for example, Si, Sn, Al, Ge, Pb, Bi, Sb, Si-Y' alloy (Y' is an alkali metal, an alkaline earth metal, a Group 13 element, a Group 14 element, a transition metal, a rare earth element, or a combination thereof, but not Si), a Sn-Y' alloy (wherein Y' is an alkali metal, an alkaline earth metal, a Group 13 element, a Group 14 element, a transition metal, a rare earth element, or a combination thereof, and not Sn), etc. Element Y' may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

The transition metal oxide may be, for example, lithium titanium oxide, vanadium oxide, lithium vanadium oxide, and the like.

The non-transition metal oxide may be, for example, $SnO_2$, $SiO_x$ ($0 <x<2$), etc.

The carbon-based material may be, for example, a crystalline carbon, amorphous carbon, or mixtures thereof. The crystalline carbon may be, for example, graphite such as amorphous, plate-like, flake-like, spherical or fibrous natural graphite or artificial graphite. The amorphous carbon may be, for example, soft carbon (low-temperature calcined carbon) or hard carbon, mesophase pitch carbide, calcined coke, and the like.

The amounts of the negative electrode active material, the conductive agent, the binder, and the solvent used for the positive electrode are at such levels that are normally used in lithium secondary batteries. Depending on the use and configuration of the lithium secondary battery, one or more of the conductive agent, the binder, and the solvent may be omitted.

Next, a separator to be inserted between the positive electrode and the negative electrode is prepared.

Any separator that is normally used in a lithium secondary battery may be used herein. Any separator that has low resistance to ion movement of electrolyte and excellent ability to absorb electrolyte, may be used. For example, the separator may be selected from glass fiber, polyester, Teflon, polyethylene, polypropylene, polytetrafluoroethylene (PTFE), or a combination thereof, which may be in the form of a nonwoven fabric or a woven fabric. For example, a separator that can be wound, such as polyethylene or polypropylene, is used for a lithium ion battery, and a separator with excellent electrolyte wetting ability may be used for a lithium ion polymer battery. For example, the separator may be manufactured according to the following method.

A polymer resin, a filler, and a solvent may be mixed to prepare a separator composition. The separator composition may be directly coated and dried on the electrode to form a separator. Alternatively, after the separator composition is cast and dried on a support, a separator film separated from the support may be laminated on an electrode to form a separator.

The polymer resin used to manufacture the separator is not particularly limited, and all materials used for the binding material for an electrode plate may be used. For example, vinylidene fluoride/hexafluoropropylene copolymer, polyvinylidene fluoride (PVDF), polyacrylonitrile, polymethyl methacrylate, or mixtures thereof may be used.

Next, the electrolyte as described above is prepared.

The electrolyte may further include an organic solid electrolyte or/and an inorganic solid electrolyte, in addition to the electrolytes as described above.

For example, the organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, or the like.

For example, the inorganic solid electrolyte may be boron oxide, lithium oxynitride, etc., but is not limited thereto. Any material that is sued as a solid electrolyte, may be used herein. The inorganic solid electrolyte may be formed on the negative electrode by, for example, sputtering, or a separate solid electrolyte sheet is laminated on the negative electrode.

As shown in FIG. 1, a lithium secondary battery 1 includes a positive electrode 3, a negative electrode 2, and a separator 4. The positive electrode 3, the negative electrode 2, and the separator 4 may be wound or folded to be housed in a battery case 5. An electrolyte is injected into the battery case 5 and sealed with a cap assembly 6 to complete the manufacture of the lithium secondary battery 1. The battery case 5 may be cylindrical, but not necessarily limited to such a shape, for example, a prismatic shape, a thin film shape, a coin shape and the like.

For example, a pouch type lithium secondary battery may include one or more battery structures. A separator is located between a positive electrode and a negative electrode to form a cell structure. After the battery structure is stacked in a bi-cell structure, the resultant structure is wet by an organic electrolyte solution, and then, housed and sealed by a pouch, thereby completing the manufacture of a pouch-type lithium secondary battery. A plurality of battery structures are stacked to form a battery pack, and the battery pack is used in all devices requiring high capacity and high output. For example, the battery pack may be used for laptops, smartphones, electric vehicles, etc.

Since lithium secondary batteries have excellent lifespan characteristics and high rate characteristics, they may be used, for example, in electric vehicles (EVs). For example, the lithium secondary batteries are used for hybrid vehicles such as plug-in hybrid electric vehicles (PHEVs). The lithium secondary batteries are also used in fields requiring large amounts of power storage. For example, the lithium secondary batteries are used for electric bicycles, power tools, etc.

a and b in the expression "Ca to b" used herein refer to the number of carbon atom of a specific functional group. That is, the functional group may include carbon atoms in the number of a to the number of b. For example, a "C1-C4 alkyl group" refers to an alkyl group having 1 to 4 carbon atoms, that is, $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

The nomenclature for a particular radical may include either a mono-radical or a di-radical, depending on the context. For example, when a substituent requires two linking sites to the rest of the molecule, the substituent should be understood as a diradical. For example, a substituent specified by an alkyl group requiring two linking sites includes diradicals such as $-CH_2-$, $-CH_2CH_2-$, $-CH_2CH(CH_3)CH_2-$, and the like. Other radical nomenclatures such as "alkylene" clearly indicate that the radical is a diradical.

The term "alkyl group" or "alkylene group" refers to a branched or unbranched aliphatic hydrocarbon group. In an embodiment, an alkyl group may be substituted or unsubstituted. The alkyl group includes methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, etc., and is not necessarily limited thereto, and each of these may optionally be substituted or unsubstituted. In an embodiment, an alkyl group may have 1 to 6 carbon atoms. For example, the C1-C6 alkyl group may be methyl, ethyl, propyl, isopropyl, butyl, iso-butyl, sec-butyl, pentyl, 3-pentyl, hexyl, etc., but is not necessarily limited thereto.

The term "cycloalkyl group" used herein refers to a fully saturated carbocyclic ring or a ring system. For example, the term refers to cyclopropyl, cyclobutyl, cyclopentyl, or cyclohexyl.

The term "alkenyl group" used herein refers to a hydrocarbon group containing at least one carbon-carbon double bond and containing 2 to 20 carbon atoms, and the alkenyl group includes an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, a cycloheptenyl group, etc., and is not limited thereto. In an embodiment, an alkenyl group may be substituted or unsubstituted. In an embodiment, an alkenyl group may have 2 to 40 carbon atoms.

The term "alkynyl group" is a hydrocarbon group containing at least one carbon-carbon triple bond and containing 2 to 20 carbon atoms. The alkynyl group includes an ethynyl group, a 1-propynyl group, a 1-butynyl group, a 2-butynyl group, and is not limited thereto. In an embodiment, an alkynyl group may be substituted or unsubstituted. In an embodiment, an alkynyl group may have 2 to 40 carbon atoms.

The term "alkoxy group" used herein refers to an alkyl group bonded to oxygen, and specific examples of the alkoxy group include methoxy, ethoxy, propoxy, and the like, and one or more hydrogen atoms of the alkoxy group may be substituted or unsubstituted.

The term "aromatic" used herein refers to a ring or ring system having a conjugated pi electron system, and includes carbocyclic aromatic groups (for example, phenyl groups) and heterocyclic aromatic groups (for example, pyridine). The term includes monocyclic or fused polycyclic rings (that is, rings that share adjacent pairs of atoms), provided that the entire ring system is aromatic.

The term "aryl group" used herein refers to an aromatic ring or ring system in which the ring backbone contains only carbon (that is, two or more fused rings sharing two adjacent carbon atoms). When the aryl group is a ring system, each ring in the system is aromatic. For example, the aryl group includes, but is not limited to, a phenyl group, a biphenyl group, a naphthyl group, a phenanthrenyl group, a naphthacenyl group, and the like. The aryl group may be substituted or unsubstituted.

The term "heteroaryl group" used herein refers to an aromatic ring system having one ring or a plurality of fused rings, wherein at least one ring atom is not carbon, i.e., a heteroatom. In fused ring systems, one or more heteroatoms may be present in only one ring. For example, heteroatoms include, but are not necessarily limited to, oxygen, sulfur, and nitrogen. For example, the heteroaryl group may include furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, and the like, and is not limited thereto.

The terms "aralkyl group" and "alkylaryl group" used herein refer to an aryl group connected as a substituent via an alkylene group, such as a C7-C14 aralkyl group, and includes a benzyl group, a 2-phenylethyl group, a 3-phenylpropyl group, and a naphthylalkyl group, and are not limited thereto. In one embodiment, the alkylene group is a lower alkylene group (that is, a C1-C4 alkylene group).

The term "aryloxy group" used herein refers to an aryl group bonded to oxygen, and specific examples of the aryloxy group include a phenoxy group and the like, and one or more hydrogen atoms of the aryl group may be substituted or unsubstituted.

The term "cycloalkenyl group" used herein is a carbocycle ring or ring system having one or more double bonds, and is a ring system without an aromatic ring. For example, the cycloalkenyl group may be a cyclohexenyl group.

The term "heterocyclyl group" used herein is a non-aromatic ring or ring system that includes one or more heteroatoms in the ring backbone.

The term "halogen" used herein is a stable element belonging to Group 17 of the Periodic Table of Elements, and may be, for example, fluorine, chlorine, bromine or iodine, particularly fluorine and/or chlorine.

The term "cyano group" used herein refers to "a -CN group".

In this specification, substituents are derived by exchanging one or more hydrogen atoms with other atoms or functional groups in an unsubstituted parent group. Unless otherwise stated, the case where a functional group is considered as being "substituted" refers to a case where the functional group is substituted with one or more substituents selected from a C1-C40 alkyl group, a C2-C40 alkenyl group, a C3-C40 cycloalkyl group, a C3-C40 cycloalkenyl group, a C1-C40 alkyl group, and a C7-C40 aryl group. The case where a functional group is "optionally substituted" refers to a case where the functional group may be substituted with the substituents described above.

The disclosure will be described in more detail through the following examples and comparative examples. However, the embodiments are provided herein for illustrative purpose only, and do not limit the scope of the present disclosure.

[Examples]

(Manufacture of electrolyte)

**Example 1: 1 part by weight of Compound 1 and 1 part by weight of Compound 3**

1.3 M $LiPF_6$ was added to a mixed solvent in which the volume ratio of ethylene carbonate (EC), propylene carbonate (PC), ethyl propionate (EP), and propyl propionate (PP) was 10:15:30:45. 1 part by weight of bis(4-fluorophenyl)sulfone, manufactured by Sigma Aldrich, 'Compound 1'), which is a sulfone-based compound additive, and 1 part by weight of dimethoxy diphenyl silane (manufactured by Sigma Aldrich, 'Compound 3'), which is a silane-based compound additive, were added, based on 100 parts by weight of the total amount of the electrolyte, to the mixed solvent to prepare an electrolyte.

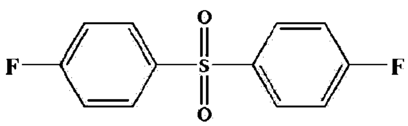

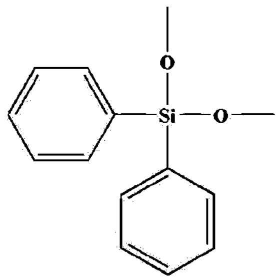

Compound 1 Compound 3

**Example 2: 1.5 parts by weight of Compound 1 and 1.5 parts by weight of Compound 3**

An electrolyte was prepared in the same manner as used in Example 1, except that 1.5 parts of bis(4-fluorophenyl)sulfone, manufactured by Sigma Aldrich, 'Compound 1'), which is a sulfone-based compound additive, and 1.5 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Example 3: 0.3 parts by weight of Compound 1 and 0.3 parts by weight of Compound 3**

An electrolyte was prepared in the same manner as used in Example 1, except that 0.3 parts of bis(4-fluorophenyl)sulfone, manufactured by Sigma Aldrich, 'Compound 1'), which is a sulfone-based compound additive, and 0.3 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Example 4: 1 part by weight of Compound 1 and 2 parts by weight of Compound 3**

An electrolyte was prepared in the same manner as used in Example 1, except that 1 part of bis(4-fluorophenyl)sulfone, manufactured by Sigma Aldrich, 'Compound 1'), which is a sulfone-based compound additive, and 2 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Example 5: 1 part by weight of Compound 1 and 3 parts by weight of Compound 3**

An electrolyte was prepared in the same manner as used in Example 1, except that 1 part of bis(4-fluorophenyl)sulfone, manufactured by Sigma Aldrich, 'Compound 1'), which is a sulfone-based compound additive, and 3 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Example 6: 1 part by weight of Compound 1 and 7 parts by weight of Compound 3**

An electrolyte was prepared in the same manner as used in Example 1, except that 1 part of bis(4-fluorophenyl)sulfone, manufactured by Sigma Aldrich, 'Compound 1'), which is a sulfone-based compound additive, and 7 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Example 7: 7 parts by weight of Compound 1 and 1 part by weight of Compound 3**

An electrolyte was prepared in the same manner as used in Example 1, except that 7 parts of bis(4-fluorophenyl)sulfone, manufactured by Sigma Aldrich, 'Compound 1'), which is a sulfone-based compound additive, and 1 part by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

**Comparative Example 1**

1.3 M $LiPF_6$ was added to a mixed solvent in which the volume ratio of ethylene carbonate (EC), propylene carbonate (PC), ethyl propionate (EP), and propyl propionate (PP) was 10:15:30:45 to prepare an electrolyte.

**Comparative Example 2: 2 parts by weight of Compound 1**

An electrolyte was prepared in the same manner as in Example 1, except that 2 parts by weight of bis (4-fluorophenyl) sulfone, manufactured by Sigma Aldrich, 'Compound 1'), which is a sulfone-based compound additive, based on 100 parts by weight of the total amount of the electrolyte was added to the mixed solvent.

**Comparative Example 3: 2 parts by weight of Compound 3**

An electrolyte was prepared in the same manner as in Example 1, except that 2 parts by weight of dimethoxy diphenyl silane, manufactured by Sigma Aldrich, 'Compound 3'), which is a silane-based compound additive, based on 100 parts by weight of the total amount of the electrolyte was added to the mixed solvent.

**Comparative Example 4: 2 parts by weight of Compound 4**

An electrolyte was prepared in the same manner as in Example 1, except that 2 parts by weight of diethoxy diphenyl silane, manufactured by Sigma Aldrich, 'Compound 4'), which is a silane-based compound additive, based on 100 parts by weight of the total amount of the electrolyte was added to the mixed solvent.

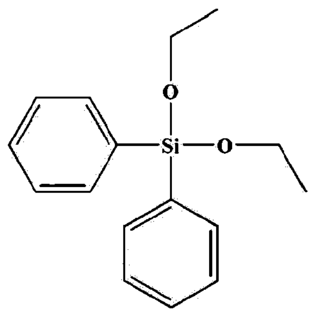

Compound 4

**Comparative Example 5: 8 parts by weight of Compound 1 and 8 parts by weight of Compound 3**

An electrolyte was prepared in the same manner as used in Example 1, except that 8 parts of bis(4-fluorophenyl)sulfone, manufactured by Sigma Aldrich, 'Compound 1'), which is a sulfone-based compound additive, and 8 parts by weight of dimethoxy diphenyl silane (manufactured by Sigma Aldrich, 'Compound 3'), which is a silane-based compound additive, were added, based on 100 parts by weight of the total amount of the electrolyte, to the mixed solvent.

(Manufacture of lithium secondary batteries (coin cells))

**Example 8**

98 wt% of artificial graphite, 1 wt% of styrene-butadiene rubber (SBR), and 1 wt% of carboxymethylcellulose (CMC) were mixed and then added to distilled water and stirred for 60 minutes using a mechanical stirrer to prepare a negative electrode active material slurry. The slurry was applied to a thickness of about 60 μm on a 10 μm-thick copper current collector using a doctor blade, dried in a hot air dryer at 100 °C for 0.5 hour, dried again for 4 hours at 120 °C, and roll-pressed to prepare a negative electrode.

97 wt% of $LiCoO_2$ (LCO), 0.5 wt% of artificial graphite powder, which is a conductive agent, 0.8 wt% of carbon black (Ketjen black), 0.2 wt% of acrylonitrile rubber, and 1.5 wt% of polyvinylidene fluoride (PVdF) were mixed with N-methyl-2-pyrrolidone, and then stirred for 30 minutes using a mechanical stirrer to prepare a positive electrode active material slurry. The slurry was applied to a thickness of about 60 μm on a 20 μm-thick aluminum current collector using a doctor blade, dried in a hot air dryer at 100 °C for 0.5 hour, dried again for 4 hours at 120 °C, and roll-pressed to prepare a positive electrode.

Lithium secondary batteries (coin cells) were manufactured using a polyethylene separator having a thickness of 14 μm with ceramic coated on positive electrode, and the electrolyte prepared in Example 1, which were used respectively as the separator and the electrolyte.

**Examples 9 to 14**

Lithium secondary batteries (coin cells) were manufactured in the same manner as in Example 8, except that the electrolytes prepared according to Examples 2 to 7 were used instead of the electrolyte prepared in Example 1.

**Comparative Examples 6 to 10**

Lithium secondary batteries (coin cells) were manufactured in the same manner as in Example 8, except that the electrolytes prepared according to Comparative Examples 1 to 5 were used instead of the electrolyte prepared in Example 1.

(Manufacture of lithium secondary batteries (pouch cells))

**Example 15**

98 wt% of graphite particles, 1 wt% of carboxymethyl cellulose (CMC), and 1 wt% of styrene-butadiene rubber (SBR) aqueous dispersion binder were mixed and added to distilled water and stirred for 60 minutes using a mechanical stirrer to prepare a negative electrode active material slurry. The slurry was applied to a thickness of about 60 μm on a 10 μm-thick copper current collector using a doctor blade, dried in a hot air dryer at 100 °C for 0.5 hours, dried again for 4 hours at 120 °C, and roll-pressed to prepare a negative electrode. The mixture density (E/D) of the negative electrode was 1.55 g/cc, and the loading level (L/L) was 14.36 $mg/cm^2$.

Separately, a positive electrode was prepared by performing the following process.

94 wt% of $LiNi_{0.6}Co_{0.2}Mn_{0.2}O_2$ (NCM 622), 3.0 wt% of Denka black, which is a conductive agent, and 3.0 wt% of PVDF, which is a binder, were mixed and added to an N-methyl-2-pyrrolidone solvent, and stirred for 30 minutes using a mechanical stirrer to prepare a positive electrode active material slurry. The slurry was applied to a thickness of about 60 μm on a 20 μm-thick aluminum current collector using a doctor blade, dried in a hot air dryer at 100 °C for 0.5 hour, dried again for 4 hours at 120 °C, and roll-pressed to prepare a positive electrode. The mixture density (E/D) of the positive electrode was 3.15 g/cc, and the loading level (L/L) was 27.05 $mg/cm^2$.

A polyethylene separator (thickness: 16 μm), which is a separator, and the electrolyte of Example 1, which is an electrolyte, were used to prepare a lithium secondary battery (pouch cell of about 40 mAh).

**Examples 16 to 21**

Lithium secondary batteries (pouch cells) were manufactured in the same manner as in Example 15, except that the electrolytes prepared according to Examples 2 to 7 were used instead of the electrolyte prepared in Example 1.

**Comparative Examples 11 to 15**

Lithium secondary batteries (pouch cells) were manufactured in the same manner as in Example 15, except that the electrolytes prepared according to Comparative Examples 1 to 5 were used instead of the electrolyte prepared in Example 1.

**Evaluation Example 1: overcharge characteristics**

The lithium secondary batteries manufactured according to Examples 8 and 9 and Comparative Examples 6 to 10 were subjected to a formation step, and the voltage of the lithium secondary batteries that had undergone the formation step were charged with the current at 0.2 C rate at 25 °C until the voltage reached 6 V (vs. Li), and the time taken to reach the voltage was calculated. The results are shown in Table 1 below and FIG. 2.

Table 1

| | Time (sec) taken to reach the voltage of 6 V |
|---|---|
| Example 8 | 7970 |
| Example 9 | 8390 |
| Comparative Example 6 | 3579 |
| Comparative Example 7 | 6756 |
| Comparative Example 8 | 4300 |
| Comparative Example 9 | 6415 |
| Comparative Example 10 | 4576 |

As shown in Table 1 and FIG. 2, it can be seen that the voltage rise rates of the lithium secondary batteries manufactured by Examples 8 and 9 (using an electrolyte having, as an additive, 1 part by weight of Compound 1 and 1.5 parts by weight of Compound 3) were the most delayed compared to those of the lithium secondary batteries manufactured according to Comparative Examples 6 to 10 (using an electrolyte having, as an additive, 2 parts by weight of Compound 1, Compound 3, or Compound 4 alone, 8 parts by weight of Compound 1, and 8 parts by weight of Compound 3.)

In addition, for each of the lithium secondary batteries manufactured by Examples 15 to 21 and Comparative Examples 11, 12, 13, and 15, two cells (hereinafter referred to as "first cell" and "second cell") were subjected to the formation step at 25 °C, and the lithium secondary batteries that had undergone the formation step were charged with a constant current of 0.2 C rate for 7 hours and 30 minutes until the voltage reached 10 V (vs. Li) while observing the condition of the lithium secondary batteries. The experimental results were indicated as NG (NOT GOOD) and OK, and the maximum temperature (°C) of the first cell and the second cell and the short occurrence time of the first cell and the second cell were recorded. The results are shown in Table 2 below.

Table 2

| | Overchar ge result | first cell/second cell Maximum temperature (°C) | first cell/second cell Short occurrence time |
|---|---|---|---|
| Example 15 | OK | 41.2/77.1 | - |
| Example 16 | OK | 67.2/44.9 | - |
| Example 17 | OK | 71.8/83.4 | - |
| Example 18 | OK | 73.6/32.5 | - |
| Example 19 | OK | 56.3/69.2 | - |

(continued)

| | Overchar ge result | first cell/second cell Maximum temperature (°C) | first cell/second cell Short occurrence time |
|---|---|---|---|
| Example 20 | OK | 74.7/79.6 | - |
| Example 21 | OK | 73.8/52.9 | - |
| Comparative Example 11 | NG | 452/428 | 2 hours 58 minutes 12 hours 53 minutes |
| Comparative Example 12 | NG | 286/303 | 5 hours 12 minutes 15 hours 24 minutes |
| Comparative Example 13 | NG | 265/242 | 4 hours 56 minutes 14 hours 37 minutes |
| Comparative Example 15 | OK | 78.1/67.5 | - |

As shown in Table 2, it can be seen that the safety of the lithium secondary batteries manufactured according to Examples 15 to 21 (using electrolytes having, as an additive, Compound 1 and Compound 3) was enhanced in the overcharging step. The lithium secondary batteries manufactured according to Examples 15 to 21 (using electrolytes, having, as an additive, Compound 1 and Compound 3) had low maximum temperature in the overcharging step and no short occurrence, compared to the lithium secondary batteries manufactured according to Comparative Examples 11, 12, and 13 (no additives are used for the electrolytes, or using an electrolyte having, as an additive, Compound 1 or Compound 3).

**Evaluation Example 2: Low temperature (-10 °C) discharge capacity ratio**

The lithium secondary batteries manufactured according to Examples 15 to 21 and Comparative Examples 12, 13, 15, and 17 were subjected to a formation step at 25 °C, and the lithium secondary batteries that had undergone the formation step were subjected to a constant-current charging at a current of 1.5 C rate at 25 °C until the voltage reached 4.48 V (vs. Li), and in a constant voltage mode, while maintaining 4.48 V, the cut-off was performed at a current of 0.02 C rate. Subsequently, after storage at 25 °C and -10 °C for 2 hours, at each temperature of 25 °C and -10 °C, the cells were discharged at a constant current of 0.2 C rate until the voltage reached 3.0 V (vs. Li). The discharge capacity for each temperature (25 °C, -10 °C) of the prepared cells was measured. The measured discharge capacity at each temperature (25 °C, -10 °C) was substituted into the following Equation 1 to obtain the low temperature (-10 °C) discharge capacity ratio (%). The results are shown in Table 3 below.

[Equation 1]

$$\text{Low temperature } \left(-10\ ^\circ\text{C}\right) \text{ discharge capacity ratio } (\%) = [\frac{\left(\text{discharge capacity at}-10^\circ\text{C}\right)}{\left(\text{discharge capacity at } 25^\circ\text{C}\right)} * 10]$$

[Table 3]

| | Low temperature (-10 °C) discharge capacity ratio (%) |
|---|---|
| Example 15 | 85.1 |
| Example 16 | 86.7 |
| Example 17 | 87.9 |
| Example 18 | 83.5 |
| Example 19 | 85.3 |
| Example 20 | 82.4 |
| Example 21 | 83.6 |

(continued)

| | Low temperature (-10 °C) discharge capacity ratio (%) |
|---|---|
| Comparative Example 11 | 82.1 |
| Comparative Example 12 | 83.1 |
| Comparative Example 13 | 84.9 |
| Comparative Example 15 | 73.2 |

As shown in Table 3, the low-temperature (-10 °C) discharge capacity ratios of the lithium secondary batteries manufactured according to Examples 15 to 21 were similar or higher than those of the lithium secondary batteries manufactured according to Comparative Examples 11, 12, 13, and 15 (using an electrolyte having no additives, or using an electrolyte having, as an additive, 2 parts by weight of Compound 1, 2 parts by weight of Compound 3, 8 parts by weight of Compound 1, and 8 parts by weight of Compound 3.

Among them, the low-temperature (-10 °C) discharge capacity ratio of the lithium secondary battery manufactured according to Example 17 (using an electrolyte having, as an additive, 0.3 parts by weight of Compound 1 and 0.3 parts by weight of Compound 3) was the highest.

Comparative Example 15 includes a sulfone-based compound additive including at least one phenyl group and a sulfone-based compound additive including at least one phenyl group at a ratio of 1:1. However, the sum of the two compounds was 10 parts by weight or more, that is, 16 parts by weight, and the low-temperature discharge capacity ratio was the lowest.

As such, it can be seen that the lithium secondary batteries manufactured according to Examples 15 to 21 have enhanced safety which was obtained by improving overcharge characteristics without the decrease in the low-temperature (-10 °C) discharge capacity ratio even when the sulfone-based compound additive and the silane-based compound additives were used in the electrolyte.

**Evaluation Example 3: High temperature (60 °C) storage characteristics - thickness increase rate**

The lithium secondary batteries manufactured according to Examples 15 to 21 and Comparative Examples 12, 13, 15, and 17 were subjected to a formation step at 25 °C, and the lithium secondary batteries that had undergone the formation step were subjected to a constant-current charging at a current of 1.5 C rate at 25 °C until the voltage reached 4.48 V (vs. Li), and in a constant voltage mode, while maintaining 4.48 V, the cut-off was performed at a current of 0.02 C rate. Then, the lithium secondary batteries were preserved at 60 °C for 8 weeks. The battery thickness before storage was measured, and the battery thickness after 8 weeks of storage was measured. The thickness increase rate was obtained through Equation 2 using the cell thickness before storage and the cell thickness after 8 weeks of storage. The results are shown in Table 4 below.

[Equation 2]

$$\text{Thickness increase ratio} = [\frac{(\text{battery thickness after 8 weeks of storage}) - (\text{battery thickness before storage})}{\text{battery thickness before storage}} * 100]$$

[Table 4]

| | High-temperature (60°C) storage thickness increase rate (%) |
|---|---|
| Example 15 | 9.15 |
| Example 16 | 9.01 |
| Example 17 | 8.82 |
| Example 18 | 9.36 |
| Example 19 | 9.24 |
| Example 20 | 9.67 |
| Example 21 | 9.43 |

(continued)

| | High-temperature (60°C) storage thickness increase rate (%) |
|---|---|
| Comparative Example 11 | 9.75 |
| Comparative Example 12 | 9.51 |
| Comparative Example 13 | 9.45 |
| Comparative Example 15 | 14.8 |

As shown in Table 4, the high-temperature storage thickness increase rate of the lithium secondary batteries manufactured according to Examples 15 to 21 were slightly higher or lower than the lithium secondary batteries manufactured according to Comparative Examples 11, 12, 13, and 15 (using an electrolyte having no additives, or an electrolyte having, as an additive, 2 parts by weight of Compound 1, 2 parts by weight of Compound 3, 8 parts by weight of Compound 1, and 8 parts by weight of Compound 3). From among these, the lithium secondary battery manufactured according to Example 17 (an electrolyte having, as an additive, 0.3 parts by weight of Compound 1 and 0.3 parts by weight of Compound 3) had the lowest high-temperature thickness increase rate.

Comparative Example 15 includes a sulfone-based compound additive including at least one phenyl group and a sulfone-based compound additive including at least one phenyl group at a ratio of 1:1. However, the sum of the two compounds was 10 parts by weight or more, that is, 16 parts by weight, and the thickness increase rate was the highest.

As such, it can be seen that the lithium secondary batteries manufactured according to Examples 15 to 21 have enhanced safety which was obtained by improving overcharge characteristics without the decrease in the high-temperature (60 °C) storage thickness increase rate even when the sulfone-based compound additive and the silane-based compound additives were used in the electrolyte.

**Evaluation Example 4: High-temperature (45 °C) charge/discharge characteristics**

The lithium secondary batteries manufactured according to Examples 15 to 21 and Comparative Examples 11, 12, 13, and 15 were subjected to a formation step at 25 °C, and the lithium secondary batteries that had undergone the formation step were subjected to a constant-current charging at a current of 1.5 C rate at 45 °C until the voltage reached 4.48 V (vs. Li), and subsequently, in a constant voltage mode, while maintaining 4.48 V, the cut-off was performed at a current of 0.05 C rate. Subsequently, the lithium batteries were discharged at a constant current of 0.5 C rate until the voltage reached 3.0 V (vs. Li). This charge/discharge cycle was repeated 300 times. In all charge/discharge cycles, a 10-minute stop time was provided after every charge/discharge cycle. The results are shown in Table 5 below. The capacity retention ratio in the 300$^{th}$ cycle is defined by Equation 3 below.

[Equation 3]

$$\text{Capacity retension ratio (\%)} = \left[\frac{\text{(discharge capacity in 300th cycle)}}{\text{(discharge capacity in 1st cycle)}} * 100\right]$$

[Table 5]

| | High-temperature (45 °C) capacity retention ratio (%) |
|---|---|
| Example 15 | 92.8 |
| Example 16 | 92.1 |
| Example 17 | 93.2 |
| Example 18 | 91.0 |
| Example 19 | 92.6 |
| Example 20 | 89.7 |
| Example 21 | 88.1 |
| Comparative Example 11 | 87.4 |

(continued)

| | High-temperature (45 °C) capacity retention ratio (%) |
|---|---|
| Comparative Example 12 | 87.9 |
| Comparative Example 13 | 86.9 |
| Comparative Example 15 | 83.2 |

As shown in Table 5, the high-temperature (45 °C) capacity retention ratios of the lithium secondary batteries manufactured according to Examples 15 to 21 were similar or higher than those of the lithium secondary batteries manufactured according to Comparative Examples 11, 12, 13, and 15 (using an electrolyte having no additives, or using an electrolyte having, as an additive, 2 parts by weight of Compound 1, 2 parts by weight of Compound 3, 8 parts by weight of Compound 1, and 8 parts by weight of Compound 3.

Among them, the high-temperature (45 °C) capacity retention ratio of the lithium secondary battery manufactured according to Example 17 (using an electrolyte having, as an additive, 0.3 parts by weight of Compound 1 and 0.3 parts by weight of Compound 3) was the highest.

As such, it can be seen that the lithium secondary batteries manufactured according to Examples 15 to 21 have enhanced safety which was obtained by improving overcharge characteristics without the decrease in the high-temperature (45 °C) capacity retention ratio even when the sulfone-based compound additive and the silane-based compound additives were used in the electrolyte.

## Claims

1. An electrolyte for a lithium secondary battery, comprising:

   a lithium salt;
   a non-aqueous organic solvent; and
   a sulfone-based compound additive including at least one phenyl group and a silane-based compound additive including at least one phenyl group.

2. The electrolyte of claim 1, wherein

   the sulfone-based compound additive is a compound represented by Formula 1:

Formula 1

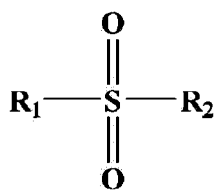

wherein

$R_1$ and $R_2$ are each independently a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 alkylaryl group, or a substituted or unsubstituted C6-C50 heteroaryl group, and
at least one of $R_1$ and $R_2$ is a $C_6$ aryl group unsubstituted or substituted with a halogen element.

3. The electrolyte of claim 1, wherein

   the sulfone-based compound additive is a compound represented by Formula 1-1:

Formula 1-1

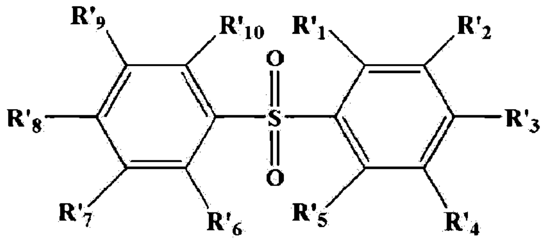

wherein

$R'_1$, $R'_2$, $R'_3$, $R'_4$, $R'_5$, $R'_6$, $R'_7$, $R'_8$, $R'_9$, and $R'_{10}$ are each independently a hydrogen atom, a halogen atom, a cyano group, $-OR_a$ ($R_a$ is a C1-C10 alkyl group, or a C6-C20 aryl group), $-C(=O)R_b$, $-C(=O)OR_b$, $-OCO(OR_b)$, $-(X)_n-NH_2$ (X is a C1-C10 alkyl group, or a C1-C10 alkoxy group, and n is an integer from 0 to 10), $-C=N(R_b)$, $-SR_b$, $-S(=O)R_b$, $-S(=O)_2R_b$, a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C3-C30 cycloalkyl group, a substituted or unsubstituted C6-C30 aryl group, a substituted or unsubstituted C6-C30 aryloxy group, or a substituted or unsubstituted C6-C30 heteroaryl group, where $R_b$ is hydrogen, a C1-C10 alkyl group, or a C6-C20 aryl group, and

at least one of $R'_1$, $R'_2$, $R'_3$, $R'_4$, $R'_5$, $R'_6$, $R'_7$, $R'_8$, $R'_9$, and $R'_{10}$ is a fluorine atom.

**4.** The electrolyte of claim 1, wherein

the silane-based compound additive is a compound represented by Formula 2:

Formula 2

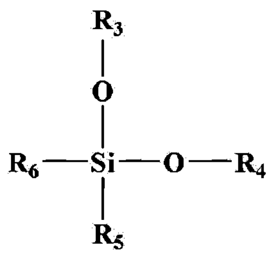

wherein

$R_3$, $R_4$, $R_5$, and $R_6$ are each independently $-OR'_a$ ($R'_a$ is a C1-C10 alkyl group or a C6-C20 aryl group), $C(=O)R'_b$, $-C(=O)OR'_b$, a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C50 aryl group, a substituted or unsubstituted C6-C50 aryloxy group, a substituted or unsubstituted C6-C50 alkylaryl group, or a substituted or unsubstituted C6-C50 heteroaryl group, where $R'_b$ is hydrogen, a C1-C10 alkyl group, or a C6-C20 aryl group, and at least one of $R_3$, $R_4$, $R_5$, and $R_6$ is a substituted or unsubstituted C6 aryl group.

**5.** The electrolyte of claim 1, wherein

the silane-based compound additive is a compound represented by Formula 2-1:

Formula 2-1

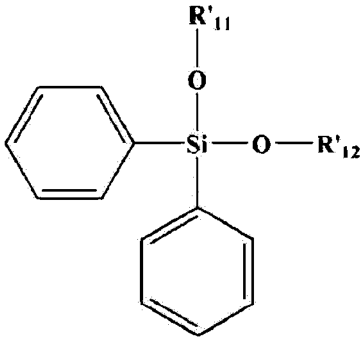

wherein
$R'_{11}$ and $R'_{12}$ are each independently C(=O)R"$_a$, -C(=O)OR"$_a$, a substituted or unsubstituted C1-C10 alkyl group, a substituted or unsubstituted C2-C10 alkenyl group, a substituted or unsubstituted C3-C10 alkynyl group, a substituted or unsubstituted C3-C20 cycloalkyl group, a substituted or unsubstituted C6-C30 aryl group, a substituted or unsubstituted C6-C30 alkylaryl group, or a substituted or unsubstituted C6-C30 heteroaryl group, where R"$_a$ is hydrogen, a C1-C10 alkyl group, or a C6-C20 aryl group.

**6.** The electrolyte of claim 1, wherein
the sulfone-based compound additive includes at least one of Compound 1 and Compound 2, and the silane-based compound additive includes at least one of Compound 3 and Compound 4:

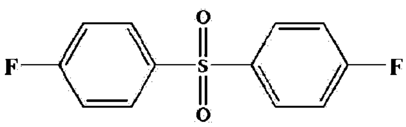

Compound 1

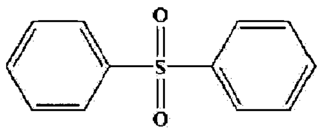

Compound 2

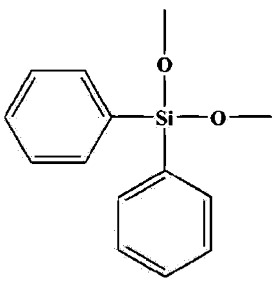

Compound 3

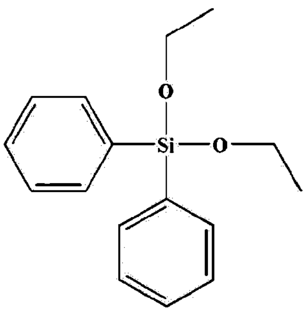

Compound 4

**7.** The electrolyte of claim 1, wherein
a weight ratio of the sulfone-based compound additive to the silane-based compound additive is 1:7 to 7:1.

**8.** The electrolyte of claim 1, wherein
a total amount of the sulfone-based compound additive and the silane-based compound additive is in a range of 0.1 parts by weight to 10 parts by weight based on 100 parts by weight of the total amount of the electrolyte.

**9.** A lithium secondary battery comprising:

a positive electrode that includes a positive electrode active material;
a negative electrode that includes a negative electrode active material; and

the electrolyte of any one of claims 1 to 8 disposed between the positive electrode and the negative electrode.

FIG. 1

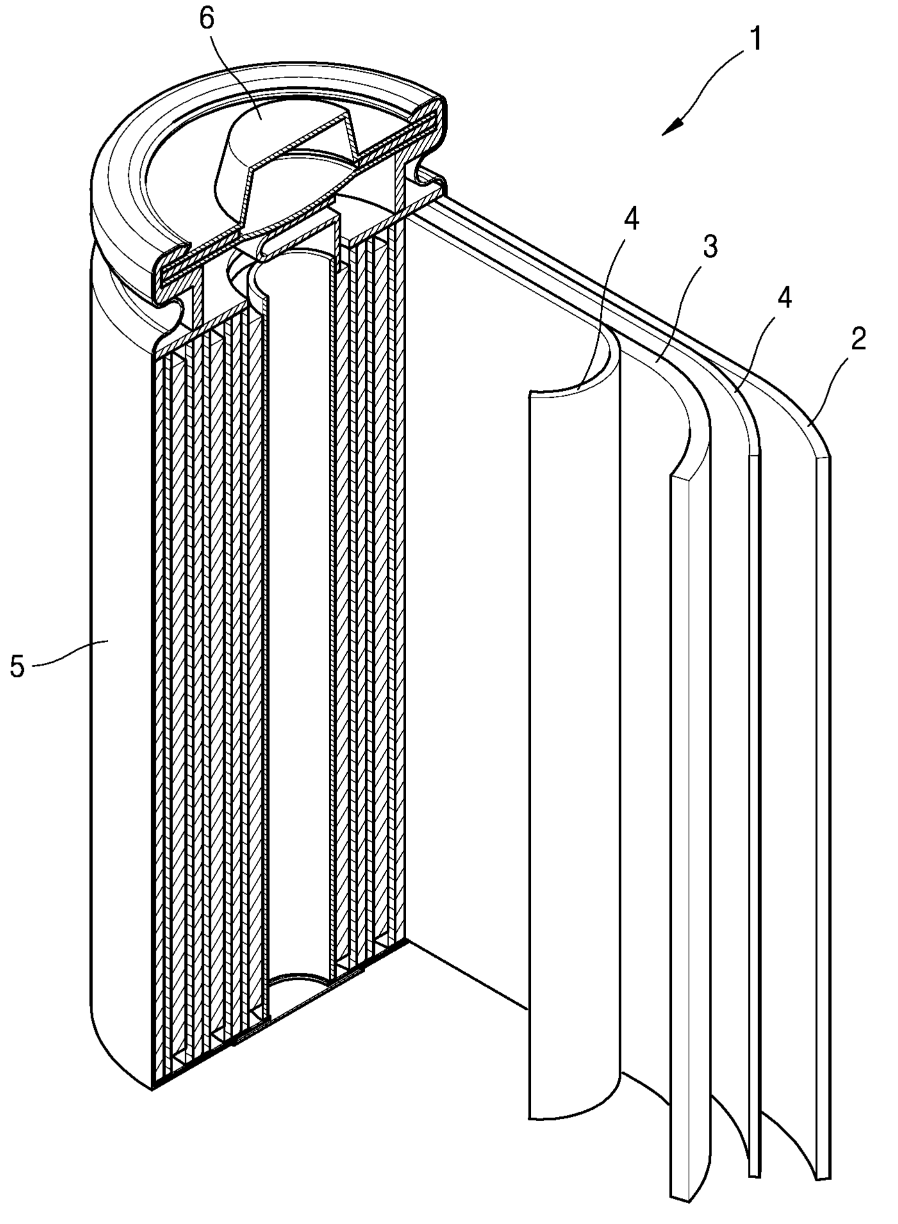

FIG. 2

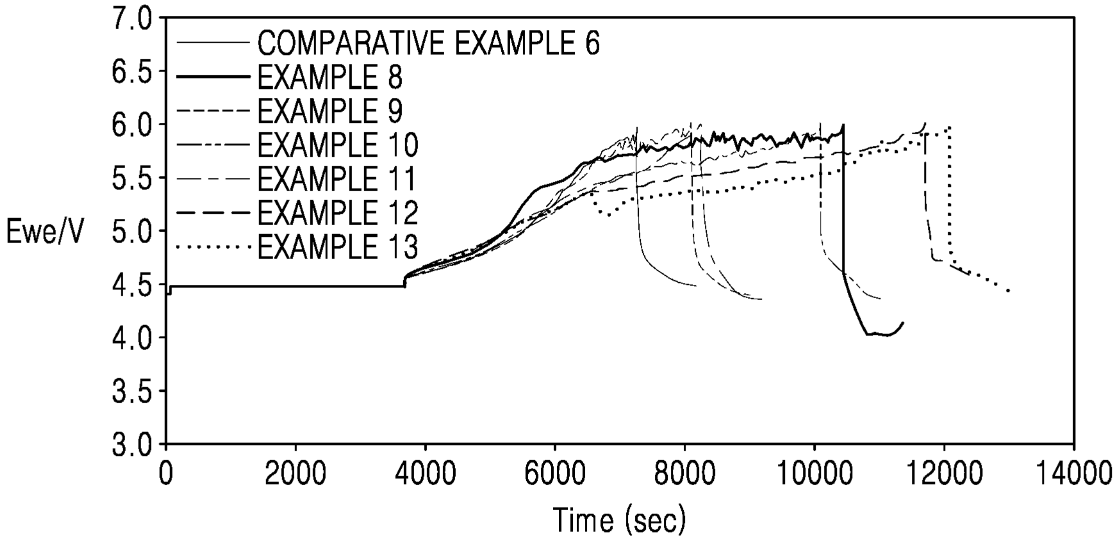
7.0
6.5
6.0
5.5
5.0
4.5
4.0
3.5
3.0
Ewe/V
0
2000
4000
6000
8000
10000
12000
14000
Time (sec)
COMPARATIVE EXAMPLE 6
EXAMPLE 8
EXAMPLE 9
EXAMPLE 10
EXAMPLE 11
EXAMPLE 12
EXAMPLE 13

**INTERNATIONAL SEARCH REPORT**

International application No.
**PCT/KR2022/007616**

**A. CLASSIFICATION OF SUBJECT MATTER**

**H01M 10/0567**(2010.01)i; **H01M 10/42**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01G 11/60(2013.01); H01G 11/64(2013.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 전해질(electrolyte), 페닐기(phenyl group), 설폰계 화합물 첨가제(sulfone-based compound additive), 실란계 화합물 첨가제(silane-based compound additive), 불소치환(fluorine-substitution)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0099883 A (UBATT INC. et al.) 25 August 2020 (2020-08-25) See claims 1, 2, 6-8, 19, 25, 28 and 29; and paragraphs [0055], [0160], [0162], [0173]-[0175], [0184] and [0185]. | 1,2,4,7-9 |
| Y | | 3,5,6 |
| Y | KR 10-2019-0024104 A (KOYJ CO., LTD. et al.) 08 March 2019 (2019-03-08) See claim 1; paragraphs [0119], [0121] and [0149]; and example 1. | 3 |
| Y | US 2003-0003370 A1 (ARAI, J. et al.) 02 January 2003 (2003-01-02) See claims 26 and 28; paragraph [0096]; and example 29. | 5,6 |
| X | KR 10-2020-0102613 A (UBATT INC. et al.) 01 September 2020 (2020-09-01) See claims 1, 24-26, 33, 52 and 53; and paragraphs [0073], [0082], [0229] and [0249]. | 1,2,4,7-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2022** | **01 September 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No. **PCT/KR2022/007616**

| C. DOCUMENTS CONSIDERED TO BE RELEVANT | | |
|---|---|---|
| Category* | Citation of document, with indication, where appropriate, of the relevant passages | Relevant to claim No. |
| Y | CHEN, L. et al. Dimethoxydiphenylsilane (DDS) as overcharge protection additive for lithium-ion batteries. Journal of power sources. 2013, vol. 244, pp. 499-504. See abstract; and page 503, 4. Conclusion. | 5,6 |

Form PCT/ISA/210 (second sheet) (July 2019)

**INTERNATIONAL SEARCH REPORT**
**Information on patent family members**

International application No.
**PCT/KR2022/007616**

| Patent document cited in search report | Publication date (day/month/year) | Patent family member(s) | Publication date (day/month/year) |
|---|---|---|---|
| KR 10-2020-0099883 A | 25 August 2020 | WO 2020-167021 A1 | 20 August 2020 |
| KR 10-2019-0024104 A | 08 March 2019 | None | |
| US 2003-0003370 A1 | 02 January 2003 | EP 1258939 A2 | 20 November 2002 |
| | | JP 2002-343423 A | 29 November 2002 |
| | | JP 3512021 B2 | 29 March 2004 |
| | | KR 10-0446928 B1 | 01 September 2004 |
| | | KR 10-2002-0088048 A | 25 November 2002 |
| | | TW 518792 B | 21 January 2003 |
| | | US 2004-0106039 A1 | 03 June 2004 |
| | | US 7074523 B2 | 11 July 2006 |
| KR 10-2020-0102613 A | 01 September 2020 | WO 2020-171483 A1 | 27 August 2020 |

Form PCT/ISA/210 (patent family annex) (July 2019)